# EUROPÄISCHE PATENTSCHRIFT

(11) **EP 4 267 312 B1**
(45) Veröffentlichungstag und Bekanntmachung des Hinweises auf die Patenterteilung: **20.08.2025**
(21) Anmeldenummer: 21844324.0
(22) Anmeldetag: 22.12.2021
(51) Int. Cl.: B05B 11/10, G01F 11/02, F16F 1/02

(54) **PUMPSPENDER**
PUMP DISPENSER
DISTRIBUTEUR À POMPE

(30) Priorität: 22.12.2020 CH 16582020
(43) Veröffentlichungstag der Anmeldung: 01.11.2023
(73) Patentinhaber: ALPLA Werke Alwin Lehner GmbH & Co. KG, 6971 Hard (AT)
(72) Erfinder: KNAUER, Roland, 96515 Sonneberg (DE)
(74) Vertreter: Swisspat Riederer Hasler Patentanwälte AG
(86) Internationale Anmeldenummer: PCT/EP2021/087417
(87) Internationale Veröffentlichungsnummer: WO 2022/136609

(56) Entgegenhaltungen:
- CN-A- 107 264 970
- CN-A- 113 044 386
- DE-A1- 102019 132 343
- JP-B2- 3 928 747
- US-A1- 2007 138 209
- US-A1- 2015 202 644
- US-A1- 2018 214 899
- US-A1- 2019 143 354

## Beschreibung

### Gebiet der Erfindung

Die Erfindung betrifft einen Pumpspender zur dosierten Entnahme einer Flüssigkeit aus einem Behälter gemäss Oberbegriff des Anspruchs 1 und einen Pumpbehälter mit einem solchen aufgesetzten Pumpspender.

### Stand der Technik

Pumpspender dienen der dosierten Entnahme einer Flüssigkeit, welche auch eine erhöhte Viskosität aufweisen kann (Cremen oder Gele) aus einem Vorratsbehälter, indem ein Dispenserkopf nach unten gedrückt wird. Der Spenderfortsatz ist an dem Dispenserkopf ausgebildet und bewegt sich daher mit dem Dispenserkopf mit. Zur Rückstellung des Dispenserkopfes ist eine Feder aus Metall in den Spender integriert. Die Ventilfunktion, welche dafür notwendig ist, dass die Flüssigkeit beim Drücken des Kopfes in den Spenderortsatz gefördert wird und beim Rückstellen des Kopfes Flüssigkeit in den Pumpspender nachgesaugt wird, ist durch Metall- oder Glaskugeln realisiert.

Eine sortenreine Entsorgung solcher aus dem Stand der Technik bekannten Pumpspender ist nicht oder nur mit sehr grossem Aufwand möglich, da die Metallfeder und die Ventilkugeln aus dem Pumpspender entfernt werden müssten. Auch ist es unpraktisch, dass sich der Spenderfortsatz mit dem Kopf mitbewegt, da dadurch Flüssigkeit oftmals ihr Ziel verfehlt (z. B. die Hand eines Benutzers) und das Umfeld des Ziels verunreinigt.

Aus der DE 10 2019 132343 A1 ist ein Pumpspender umfassend einen Vorratsbehälter und eine Spenderpumpe. Die Spenderpumpe weist einen Eingangs- und einen Ausgangskanal und eine eingangs- und ausgangsseitig durch Ventile begrenzte Pumpkammer auf. Die Rückstellvorrichtung ist durch eine Kunststofffeder gebildet mit einem unteren Federring und einem oberen Federring, die im Wesentlichen koaxial zueinander angeordnet sind. Darüber hinaus sind die Federringe durch sich über mehr als 90 Grad in Umfangsrichtung erstreckende Federbeine einfederbar miteinander verbunden.

Auch in der US 2018/0214899 A1 ist ein ähnlicher Pumpspender beschrieben, welcher eine Feder aus Kunststoff aufweist, um den gesamten Pumpspender vereinfacht rezyklieren zu können. Die Feder ist ähnlich aufgebaut wie im letzten Absatz beschrieben und weist dementsprechend Federringe und Federbeine auf. Allerdings nimmt der Durchmesser der Federringe nach unten zu, wodurch die Feder in ihren Aussenabmessungen einen Kegelstumpf und keinen Zylinder beschreibt.

### Aufgabe der Erfindung

Aus den Nachteilen des beschriebenen Stands der Technik resultiert die Aufgabe einen Dosierspender zu schaffen, welcher in seiner Funktion zu verbessert und anwenderfreundlicher gestaltet ist.

### Beschreibung

Die Lösung der gestellten Aufgabe gelingt bei einem Pumpspender durch die im kennzeichnenden Abschnitt des Patentanspruchs 1 angeführten Merkmale. Weiterbildungen und/oder vorteilhafte Ausführungsvarianten sind Gegenstand der abhängigen Patentansprüche.

Die Feder ist aus Kunststoff hergestellt und weist eine Mehrzahl von übereinander angeordneten Ringen auf, welche jeweils durch wenigstens einen ersten Verbindungssteg miteinander verbunden sind. Diese Ausgestaltung der Feder ermöglicht, dass sich die Ringe und Ringsegmente verbiegen können und sich die Feder durch eine axiale Kraft zusammendrücken lässt und sich bei Entfernung der Kraft in ihre Grundposition rückstellt, obwohl sie aus Kunststoff hergestellt ist. Die Verbindungstege haben bevorzugt die gleiche Länge. Diese können in ihrer Länge variieren, um den Federweg an den benötigten Pumpenhub anzupassen. Der Pumpspender dient der Förderung von Flüssigkeiten aus einem Behälter, wobei die Viskosität der Flüssigkeit variieren kann, solange die Flüssigkeit pumpfähig bleibt. Die Flüssigkeit kann neben einer wässrigen Flüssigkeit also beispielsweise auch eine Creme oder ein Gel sein.

Die Erfindung zeichnet sich dadurch aus, dass an dem Adapter an seiner Unterseite eine zweite Ventilscheibe aus Kunststoff gehalten ist und die zweite Ventilscheibe eine an dem Adapter vorgesehenen Belüftungsöffnung verschliesst und beim Ansaugen von Flüssigkeit in die Dosierkammer die Belüftungsöffnung freigibt. Dadurch kann sich in dem Behälter kein Unterdruck aufbauen und die Flüssigkeit kann gleichmässig durch Hinunterdrücken des Pumpkopfes gefördert werden.

In einer bevorzugten Ausführungsform der Erfindung sind die Ringe horizontal, vertikal oder schräg zur Horizontalen orientiert sind. Die vertikale und die schräge Orientierung der Ringe ermöglicht einen vergrösserten Federweg der Feder.

In noch einer weiteren bevorzugten Ausführungsform der Erfindung sind übereinanderliegende Ringe durch einen ersten und zweiten Verbindungssteg miteinander verbunden. Dadurch entsteht eine besonders stabile Feder, welche von Vorteil ist, wenn das zu pumpende Füllgut eine erhöhte Viskosität aufweist.

Als zweckdienlich hat es sich erwiesen, wenn benachbarte übereinander angeordnete erste und zweite Verbindungsstege um 90 Grad versetzt sind. Dadurch können sich die Ringe ausreichend aus der Horizontalebene heraus verbiegen, um einen Pumpenhub nach unten zu ermöglichen und eine ausreichende Rückstellkraft zu erzeugen, um Flüssigkeit in die Dosierkammer saugen zu können.

Zweckmässigerweise liegen sich der erste und zweite Verbindungssteg an dem Ring oder dem Ringsegment diametral gegenüber. Dadurch ist die Feder symmetrisch aufgebaut und erhält eine gleichmässig über den Umfang der Ringe verteilte Rückstellkraft. An den Ringsegmenten ist eine diametrale Anordnung teilweise nicht möglich. Dies wird jedoch durch Verbindungstege kompensiert, welche an den offenen Rändern der Ringsegmente angeordnet sind.

In einer besonders bevorzugten Ausführungsform der Erfindung ist die Feder ausserhalb der Dosierkammer in dem Gehäuse aufgenommen. Dadurch ist die Feder von der Flüssigkeit getrennt und von der Flüssigkeit unbeeinflusst. Dies ist insofern von Bedeutung, da der Kunststoff der Feder durch die Flüssigkeit nicht geschädigt werden kann, beispielsweise nicht spröde werden kann. Ausserdem umschliesst die Feder die Dosierkammer und ist dadurch zwangsgeführt, was zu einer zuverlässigen Funktion der Feder führt.

In einer weiteren besonders bevorzugten Ausführungsform der Erfindung weist die Feder zusätzlich zu den Ringen wenigstens ein Ringsegment auf, wobei das wenigstens eine Ringsegment eine Ausnehmung bildet. Es können auch mehrere Ringsegmente übereinander an der Feder angeordnet sein, wodurch die Ausnehmung vergrössert wird. In der Ausnehmung können Bauteile des Pumpspenders, zum Beispiel der Spenderkanal, Platz finden.

Dadurch dass zwischen vertikal orientierten Ringen einer horizontalen Ebene wenigstens ein Abstand vorgesehen ist, welcher die Ausnehmung oder einen Teil der Ausnehmung bildet, lässt sich die im letzten Absatz beschriebene Ausnehmung auch bei der Ausführungsform der Feder mit vertikal orientierten Ringen vorsehen.

In einer weiteren besonders bevorzugten Ausführungsform der Erfindung ist Spenderöffnung an dem Gehäuse vorgesehen. Dadurch bewegt sich die Spenderöffnung nicht mit dem Pumpenkopf. Die austretende Flüssigkeit verfehlt daher ihr Ziel (beispielsweise die Hand eines Benutzers) nicht und die Umgebung des Pumpspenders wird durch die Flüssigkeit nicht verschmutzt.

Zweckmässigerweise verläuft die Spenderöffnung teilweise in einem an dem Gehäuse ausgebildeten Spenderfortsatz. Dadurch lässt sich die aus dem Pumpspender austretende Flüssigkeit einfach in eine Hand oder in ein Gefäss portionieren. Denkbar ist es auch, dass die Spenderöffnung an der Gehäusewand endet und mit einem Zerstäuber versehen ist. Dadurch kann der Pumpspender auch als Pumpspray eingesetzt werden.

In einer weiteren besonders bevorzugten Ausführungsform der Erfindung ist das Ventil durch eine erste Ventilscheibe aus Kunststoff realisiert, welche Scheibe zwischen der Oberseite eines in das Gehäuse eingesetzten Adapters und dem Gehäuse angeordnet ist und entweder die Spenderöffnung oder den Adapter flüssigkeitsdicht verschliesst. Da die erste Ventilscheibe aus Kunststoff ist, besitzt sie die notwendige Flexibilität um sich verbiegen zu können und dadurch entweder den Adapter oder die Spenderöffnung freizugeben. Auch kann diese zusammen mit dem Pumpspender recycelt werden.

In einer weiteren bevorzugten Ausführungsform der Erfindung verbindet der Adapter ein bis zum Boden des Behälters sich erstreckendes Steigrohr mit dem Gehäuse. Der Adapter wirkt als ein Reduzierstück und ermöglicht es, dass das Steigrohr rasch mit dem Gehäuse verbunden werden kann. Zudem ist es für die rasche Zusammenstellung des Pumpspenders von Vorteil, wenn die erste Ventilscheibe in das Gehäuse eingelegt werden kann und dann der Adapter die erste Ventilscheibe an dem Gehäuse fixiert.

In einer bevorzugten Ausführungsform der Erfindung kann der Pumpspender mit einem in dem Behälter angeordneten und in vertikaler Richtung verschiebbaren Schieber zusammenwirken kann, wobei zwischen dem Adapter und dem Schieber eine sich im Volumen veränderbare Vorratskammer gebildet ist. Diese Ausführungsform besitzt den Vorteil, dass in die Vorratskammer keine Luft eindringen kann und sich in der Vorratskammer ausschliesslich Flüssigkeit befindet. Dadurch ist die Flüssigkeit nach der erstmaligen Betätigung des Pumpspenders in dem Behälter besonders lange haltbar. Der Schieber wird durch den Luftdruck nach jedem Pumpenhub nach oben geschoben und verringert die Grösse der Vorratskammer um das Volumen den Pumpenhubes.

Als vorteilhaft erweist es sich, wenn durch den Adapter das Gehäuse mit dem Behälter verbindbar ist. Dadurch kann nach Befüllung des Behälters der Pumpspender rasch und einfach auf den Behälter aufgesetzt werden. Bevorzugt ist der Adapter formschlüssig an dem Gehäuse und dem Behälter einschnappbar.

In einer weiteren Ausführungsform der Erfindung ist das Ventil durch eine dritte Ventilscheibe aus Kunststoff als Einlassventil und eine vierte Ventilscheibe aus Kunststoff als Auslassventil realisiert ist, wobei die dritte Scheibe einen in das Gehäuse eingesetzten Adapter verschliesst bzw. freigibt und die vierte Scheibe die Spenderöffnung verschliesst bzw. freigibt. Dadurch ist die Ventilfunktion auf zwei Ventilscheiben aufgeteilt, wodurch diese Ausführungsform sehr zuverlässig ist. Die dritte und vierte Ventilscheibe können auch aus einem anderen flexiblen Material hergestellt sein, falls die Möglichkeiten des verbesserten Recyclings nicht im Vordergrund stehen.

In einer weiteren besonders bevorzugten Ausführungsform sind an der Innenseite des Pumpenkopfes Längsrippen in unterschiedlichen Längen ausgebildet, wobei durch Verdrehen des Pumpenkopfes relativ zum Gehäuse eine der Längsrippen mit wenigstens einem an dem Gehäuse ausgebildeten Anschlag zusammenwirkt. Dadurch lässt sich die Höhe des Pumpenhubes einfach verstellen, wodurch unterschiedliche Dosier- bzw. Spendervolumen mit dem Pumpspender möglich sind. Auch ist dadurch ein Sperren des Pumpenhubes möglich, wodurch eine Transportsicherung realisiert ist. Denkbar ist es auch, dass die Längsrippen alle gleich lang sind und mehrere Anschläge mit unterschiedlichen Höhen an dem Gehäuse vorhanden sind.

Dadurch, dass in bevorzugter Weise alle Bauteile des Pumpspenders aus Kunststoff bestehen, lässt sich der Pumpspender ohne Trennschritte recyceln. Dies ist insbesondere dann der Fall, wenn alle Bauteile des Pumpspenders und der Behälter aus demselben Kunststoff hergestellt sind.

Ein weiterer Aspekt der Erfindung betrifft einen Pumpbehälter aufweisend einen Pumpspender gemäss obiger Beschreibung und einen Behälter, auf welchen der Pumpspender aufsetzbar ist. Dadurch können der Pumpspender und der Behälter fertig befüllt und zusammengesetzt verkauft werden.

Bevorzugt ist ein Pumpbehälter bei welchem der Pumpspender mit einem in dem Behälter angeordneten und in vertikaler Richtung verschiebbarer Schieber zusammenwirkt, wobei zwischen dem Adapter und dem Schieber eine sich im Volumen veränderbare Vorratskammer gebildet ist. Wie weiter oben beschrieben, bleibt die Vorratskammer frei von Luft und die in der Vorratskammer vorhandene Flüssigkeit ist besonders lange haltbar. Insbesondere für kosmetische Produkte wie Hautcremen und andere sauerstoffsensitiven Flüssigkeiten ist diese Ausführungsform daher besonders geeignet.

Der Pumpspender, zeichnet sich dadurch aus, dass das Ventil durch eine erste Ventilscheibe realisiert ist, welche Scheibe zwischen der Oberseite eines in das Gehäuse eingesetzten Adapters und dem Gehäuse angeordnet ist und entweder die Spenderöffnung oder den Adapter flüssigkeitsdicht verschliesst. Die Ventilfunktion ist daher in sehr einfacher, verlässlicher und kostengünstiger Weise realisiert.

Ein weiterer Aspekt der Erfindung betrifft einen Pumpspender, welcher sich dadurch auszeichnet, dass die Spenderöffnung an dem Gehäuse vorgesehen ist. Dies macht, wie bereits weiter oben beschrieben, den Pumpspender sehr anwenderfreundlich, weil sich die Spenderöffnung beim Pumpen nicht bewegt und sich die dosierte Flüssigkeit gezielt applizieren lässt.

Bevorzugt ist die die Spenderöffnung in einem an dem Gehäuse ausgebildeten Spenderfortsatz vorgesehen, um die Flüssigkeit gezielt in die Hand eines Benutzers oder in ein Gefäss abgeben zu können.

Noch ein Aspekt der Erfindung betrifft einen Pumpspender, welcher sich dadurch auszeichnet, an der Innenseite des Pumpenkopfes Längsrippen in unterschiedlichen Längen ausgebildet sind, wobei durch Verdrehen des Pumpenkopfes relativ zum Gehäuse eine der Längsrippen mit wenigstens einem an dem Gehäuse ausgebildeten Anschlag zusammenwirkt. Die Längsrippen ermöglichen, dass durch einfaches Verdrehen der Pumpenhub und damit das dosierte Flüssigkeitsvolumen intuitiv einstellbar sind. Auch kann dadurch eine Transportsicherung realisiert werden.

Weitere Vorteile und Merkmale ergeben sich aus der nachfolgenden Beschreibung von zwei Ausführungsbeispielen der Erfindung unter Bezugnahme auf die schematischen Darstellungen. Es zeigen in nicht massstabsgetreuer Darstellung:
- Figur 1:: eine Seitenansicht eines Pumpspenders aufgesetzt auf einen Behälter;
- Figur 2:: eine weitere Seitenansicht des Pumpspenders;
- Figur 3:: eine isometrische Ansicht einer Feder zur Rückstellung des Pumpenkopfes des Spenders in einer ersten Ausführungsform;
- Figur 4:: eine isometrische Ansicht von schräg unten auf ein Gehäuse;
- Figur 5:: eine isometrische Ansicht von schräg oben auf das Gehäuse;
- Figur 6:: eine erste Schnittdarstellung längs durch den Pumpspender;
- Figur 7:: eine zweite Schnittdarstellung längs durch den Pumpspender aus Figur 6;
- Figur 8:: eine erste Schnittdarstellung längs durch einen alternativen Pumpspender;
- Figur 9:: eine zweite Schnittdarstellung längs durch den alternativen Pumpspender aus Figur 8;
- Figur 10: eine Schnittdarstellung durch eine dritte Ausführungsform des Pumpspenders;
- Figur 11:: eine isometrische Ansicht der Feder in einer zweiten Ausführungsform und
- Figur 12:: eine isometrische Ansicht der Feder in einer dritten Ausführungsform.

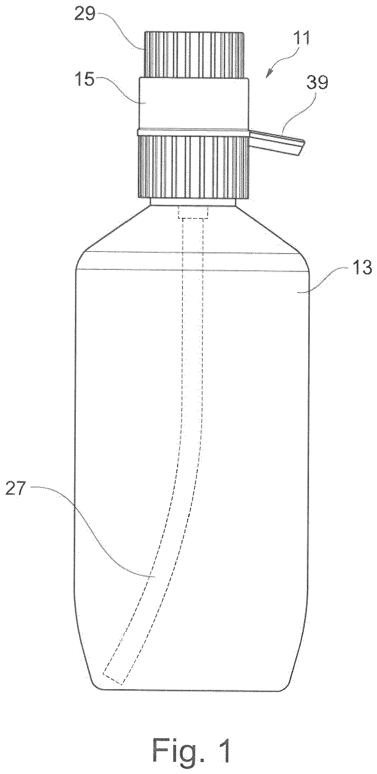

In den Figuren 1, 2, 6 und 7 ist ein Pumpspender gezeigt, welcher gesamthaft mit dem Bezugszeichen 11 bezeichnet ist. Der Pumpspender 11 lässt sich auf einen Behälter 13, beispielsweise eine Flasche 13, aufsetzen. Die Kombination aus dem Pumpspender 11 und dem Behälter 13 wird als Pumpbehälter 14 bezeichnet. Der Spender 11 weist ein Gehäuse 15 auf, mit dem er an dem Behälter 13 befestigt ist. Die Befestigung kann beispielsweise in bekannter Weise durch ein Innengewinde 17 erfolgen, welches mit einem Aussengewinde 19, ausgebildet am Behälterhals 21 zusammenwirkt. In dem Gehäuse 15 ist eine Dosierkammer 23 gebildet, in welcher die Menge an Flüssigkeit aus dem Behälter 13 angesaugt wird, welche dann nach aussen befördert wird. Das Volumen der Dosierkammer 23 entspricht dem Flüssigkeitsvolumen, welches dem Behälter 13 bei einem Pumpenhub entnommen wird. Die Dosierkammer 13 kann auch als Kolbenraum angesehen werden.

An der Unterseite des Gehäuses 15 ist ein Adapter 25 formschlüssig an diesem gehalten. Der Adapter 25 dient als Reduzierstück und verbindet ein Steigrohr 27 mit der Dosierkammer 23. Durch das Steigrohr 27 lässt sich der Behälter 13 mit dem Dosierspender 11 vollständig entleeren. An der Oberseite des Gehäuses ist ein Pumpenkopf 29 bewegbar angeordnet. Der Pumpenkopf 29 lässt sich entlang der Längsachse 31 des Pumpspenders 11 zwischen einer ersten und zweiten Position auf und ab bewegen, wodurch der Pumpenhub ausführbar ist. In der ersten Position ist der Pumpenkopf 29 an der höchsten Stelle, aus welcher er nach unten in die zweite tiefste Position gedrückt werden kann.

An dem Pumpenkopf 29 ist ein Kolben 33 festgelegt, welcher zusammen mit dem Pumpenkopf 29 in der Dosierkammer 23 auf und ab bewegbar ist. Der Kolben 33 dichtet die Dosierkammer 23 nach oben flüssigkeitsdicht ab. Eine Feder 35 ist zwischen dem Gehäuse 15 und dem Pumpenkopf 29 angeordnet. Die Feder 35 stellt den Pumpenkopf 29 in die erste Position zurück, nachdem er in die zweite Position gedrückt wurde.

Aus einer Spenderöffnung 37 verlässt die geförderte Flüssigkeit den Pumpspender 11. Bevorzugt verläuft die Spenderöffnung 37 teilweise an der Aussenseite der Dosierkammer 23 und teilweise in einem Spenderfortsatz 39. Im Gegensatz zum Stand der Technik ist die Spenderöffnung 37 bzw. der Spenderfortsatz 39 nicht an dem Pumpenkopf 29 vorgesehen, sondern an dem Gehäuse 15.

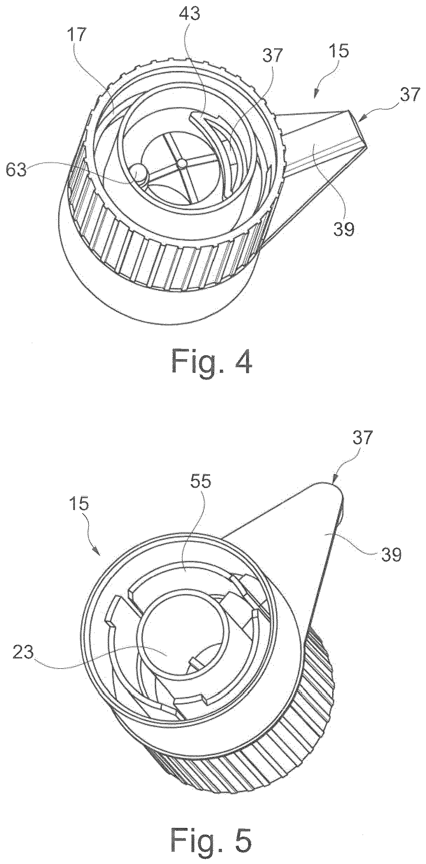

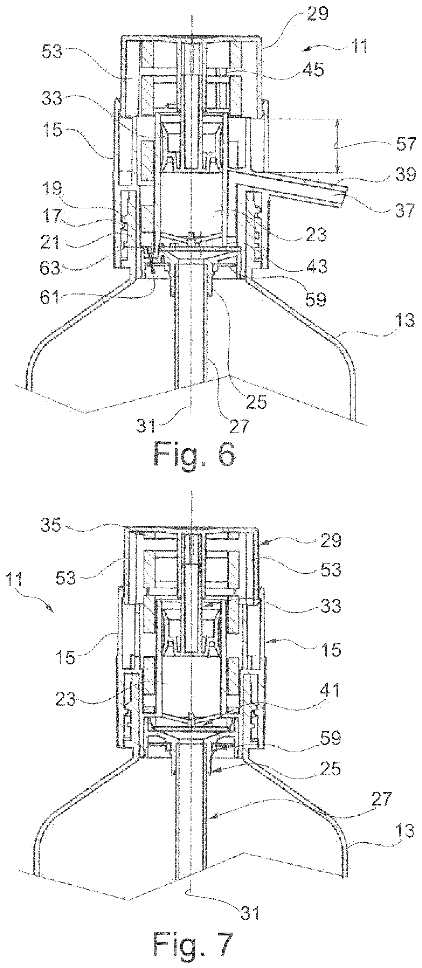

Ein Ventil definiert die Förderrichtung der Flüssigkeit von dem Steigrohr 27 über die Dosierkammer 23 in die Spenderöffnung 37. Das Ventil sperrt eine Förderung in umgekehrter Richtung. Dadurch kann die Flüssigkeit in Pumphüben in die Spenderöffnung 37 gefördert werden. In einer ersten Ausführungsform gemäss der Figuren 6 und 7 ist das Ventil durch eine erste Ventilscheibe 41 realisiert, welche aus Kunststoff hergestellt ist. Die erste Ventilscheibe 41 ist zwischen dem Adapter 25 und der Unterseite der Dosierkammer 23 eingelegt und verschliesst die Dosierkammer 23 gegenüber dem Adapter 25. An der Unterseite der Dosierkammer 23 liegt die Ventilscheibe 41 an einem sichelmondförmigen Absatz 43 an, welcher Absatz 43 die Spenderöffnung 37 umschliesst (Fig.4).

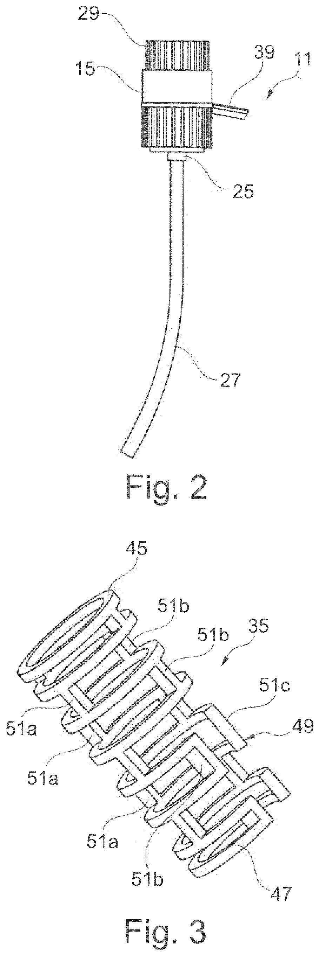

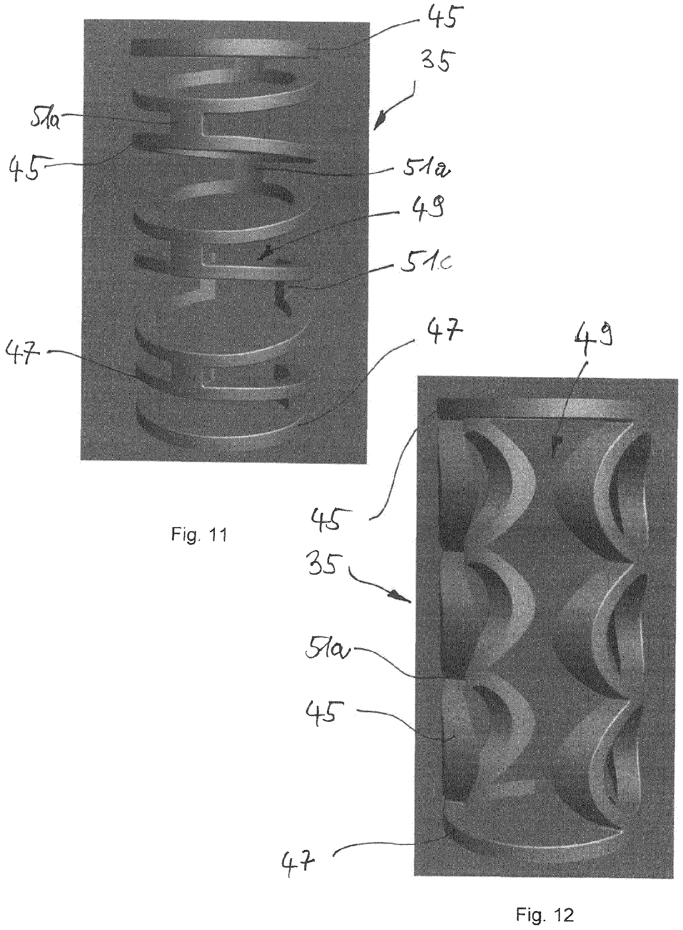

Die Feder 35 ist vollständig aus Kunststoff hergestellt und weist eine Mehrzahl von übereinander angeordneten Ringen 45 und optionalen Ringsegmenten 47 auf. Die Ringsegmente 47 sind deshalb an der Feder 35 vorhanden, damit der Teil der Spenderöffnung 37, welcher entlang der Dosierkammer verläuft, in einer Ausnehmung 49 der Feder 35 Platz findet. Benachbarte Ringe 45 sind durch einen ersten und zweiten diametral angeordneten Verbindungssteg 51a,51b verbunden. Benachbarte übereinanderliegende erste und zweite Verbindungstege 51a,51b sind um 90 Grad zueinander versetzt. Diese Anordnung ermöglicht eine federnde Verbiegung der Ringe 45 bzw. der Ringsegmente 47. Zwischen den Ringsegmenten 47 sind noch zusätzliche dritte Verbindungsstege 51c vorhanden, um die Ausnehmung 49 zu bilden. Eine erste Ausführungsform der Feder 35 ist in Figur 3 gezeigt. Die Figuren 11 und 12 zeigen eine zweite und dritte Ausführungsform der Feder 35. Die Feder 35 kommt im Gegensatz zum Stand der Technik nicht mit Flüssigkeit in Berührung, da sie ausserhalb der Dosierkammer 23 angeordnet ist und die Dosierkammer 23 quasi umschliesst. Ferner durchdringt die Feder den Pumpenkopf 29, wodurch der oberste Ring 45 ausserhalb des Pumpenkopfes 29 angeordnet ist.

Wie die Figur 11 zeigt, können benachbarte Ringe 45 auch nur durch einen Verbindungssteg 51 a verbunden sein. Um den Federweg zwischen zwei benachbarten Ringen 45 bzw. Ringsegmenten 47 zu erhöhen, können die Ringe bzw. Ringsegmente auch gegenüber der Horizontalen schräggestellt sein. Bevorzugt ist der äusserste Ring 45 und das äusserste Ringsegment 47 horizontal orientiert, um plan an dem Pumpenkopf 29 bzw. dem Gehäuse 15 anzuliegen. Lediglich an der Ausnehmung sind neben den ersten Verbindungstegen 51a auch dritte Verbindungstege 51c angeordnet, um die Ringsegmente 47 abzuschliessen.

Die zwischen dem äussersten Ring 45 und dem äussersten Ringsegment 47 liegenden Ringe 45 könne auch vertikal orientiert sein (Figur 12). Der Kontakt von benachbarten Ringen 45 bildet die Verbindungsstege 51a. Der Abstand zwischen zwei Ringen, welche in einer horizontalen Ebene liegen, bildet die Ausnehmung 49. Wie Figur 12 zeigt, können mehrere Reihen von übereinander angeordneten vertikalen Ringen vorgesehen sein. Wenn diese Reihen voneinander beanstandet sind, kann dieser Abstand die Ausnehmung 49 bilden. Denkbar wäre es auch, dass zwei benachbarte Reihen von vertikalen Ringen 45 sich einander berühren. Die vertikalen Ringe 45 erzeugen einen besonders grossen Federweg für die Feder 35.

An der Innenseite des Pumpenkopfes 29 sind Längsrippen 53 unterschiedlicher Länge ausgebildet. An der Innenseite des Gehäuses 15 sind Anschläge 55 vorgesehen (Figur 5), welche den Pumpenhub limitieren, da eine der Längsrippen 53 an einem Anschlag 55 anstösst. Der Pumpenhub 57 ist durch den Doppelpfeil dargestellt. Durch Verdrehen des Pumpenkopfes 29 kommt einer der Längsrippen 53 zum Anschlag und der Pumpenhub 57 besitzt in Abhängigkeit von der Länge der Längsrippe 53 eine bestimmte Höhe des Pumpenhubes 57. Dadurch kann das Dosiervolumen der Flüssigkeit eingestellt werden. Auch kann der Pumpenhub auf 0 gestellt werden, wodurch der Pumpspender 11 verschlossen werden kann.

Damit beim Pumpen in dem Behälter 13 kein Unterdruck entsteht ist eine Belüftung an dem Pumpspender vorgesehen. Dazu ist an der Unterseite des Adapters 25 eine zweite Ventilscheibe 59 aus Kunststoff aufgesteckt. Die zweite Ventilscheibe 59 verschliesst eine an dem Adapter 25 vorgesehene Belüftungsöffnung 61 und eine an dem Gehäuse vorgesehene weitere Belüftungsöffnung 63. Wenn in dem Behälter 13 ein Unterdruck entsteht, wird die zweite Ventilscheibe 59 vom Atmosphärendruck aufgedrückt bis der Druckunterschied ausgeglichen ist. Dadurch kann die Flüssigkeit gleichmässig von dem Pumpspender 11 gefördert werden.

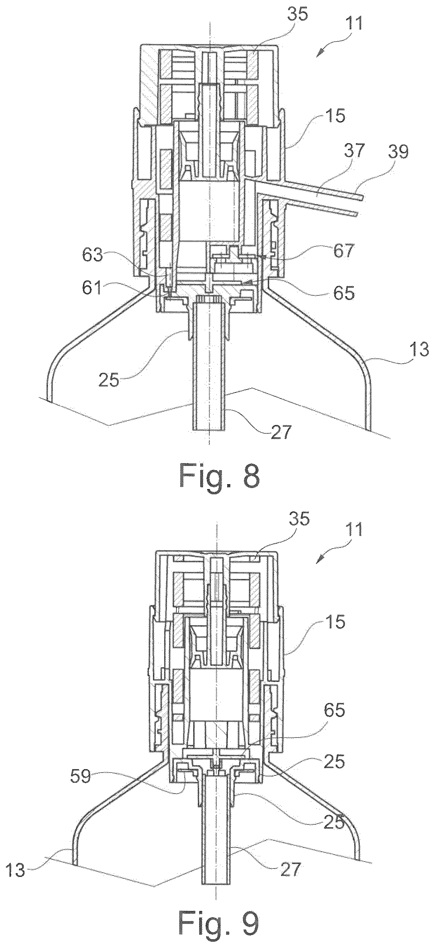

In den Figuren 8 und 9 ist eine alternative Ausführungsform der Ventilfunktion gezeigt. Dazu ist eine dritte Ventilscheibe 65 und eine vierte Ventilscheibe 67, bevorzugt jeweils aus Kunststoff gefertigt, vorgesehen. Die dritte Ventilscheibe 65 dient als Einlassventil in die Dosierkammer 23: Im Saugtakt öffnet die dritte Ventilscheibe 65 und im Drucktakt verschliesst die dritte Ventilscheibe 65 den Adapter 25. Die vierte Ventilscheibe 67 dient als Auslassventil aus der Dosierkammer 23: Im Saugtakt verschliesst die vierte Ventilscheibe 67 und im Drucktakt öffnet die vierte Ventilscheibe 67 die Spenderöffnung 37.

Der Pumpspender 11 und der Behälter 11 sind komplett metallfrei ausgeführt und es ist sogar möglich alle Bauteile aus demselben Kunststoff herzustellen; vorzugsweise PP oder PET. Dies stellt die Recyclingfähigkeit der gesamten Anordnung sicher und der Pumpspender 11 kann zusammen mit dem Behälter entsorgt und recycelt werden. Bemerkenswert ist, dass die Feder 35 und die Ventilscheiben 41,59,65 und 67 aus Kunststoff hergestellt sind. Bei Pumpspendern gemäss dem Stand der Technik werden üblicherweise eine Metallfeder und Metallkugeln als Ventile verbaut.

Der Pumpspender 11 funktioniert wie folgt:
Der Pumpenkopf 29 befindet sich in der ersten Position. Aus dieser wird er nach unten gedrückt, wodurch auch der Kolben 33 in der Dosierkammer 23 nach unten verschoben wird. Die erste Ventilscheibe 41 verschliesst bei diesem Drucktakt den Adapter 25 bzw. das Steigrohr 27 und die Flüssigkeit wird über die Spenderöffnung 37 abgegeben. Im Drucktakt wird die erste Ventilscheibe 41 derart verformt, dass sie von dem Absatz 43 teilweise abgehoben wird und dadurch die Spenderöffnung 37 freigibt. Der Drucktakt wird in der zweiten Position des Kolbens 33 beendet. Voraussetzung für die Flüssigkeitsförderung ist, dass die Dosierkammer 23 bereits mit Flüssigkeit gefüllt ist. Ansonsten muss der Pumpenkopf 29 so lange bedient werden, bis die Dosierkammer 23 gefüllt ist.

Wenn der Kolben 33 von der Feder 35 in seine Ausgangsposition (Erste Position) verschoben wird, gibt die erste Ventilscheibe 41 den Zugang zum Steigrohr 27 frei und Flüssigkeit wird in die Dosierkammer 23 gesaugt. Die Dichtwirkung ergibt sich aus dem Zusammenspiel der ersten Ventilscheibe 41 mit dem Adapter 25 und dem Absatz 43.

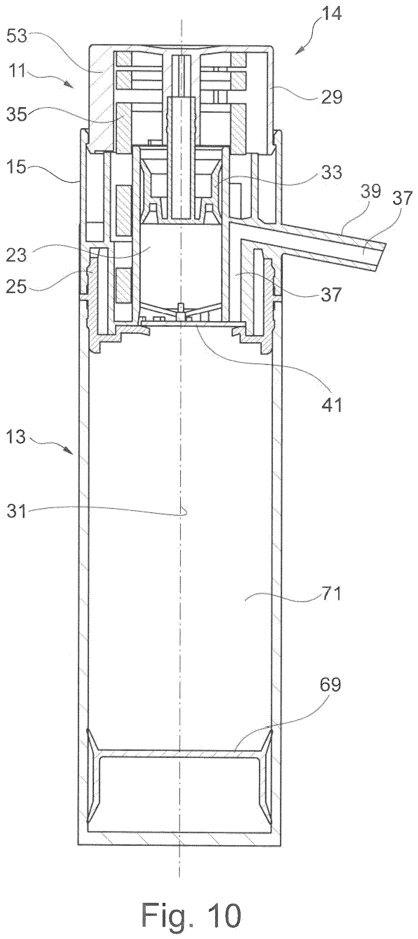

In einer weiteren Ausführungsform gemäss der Figur 10 ist in dem Behälter ein Schieber 69 angeordnet. Der Schieber 69 ist entlang der Längsachse 31 in dem Behälter 13 verschiebbar und gleitet flüssigkeitsdicht entlang der Behälterwand. Zwischen dem Adapter 25 und dem Schieber 69 ist eine Vorratskammer 71 gebildet in welcher sich die Flüssigkeit befindet. Bei jedem Pumpenhub 57 wandert der Schieber 69 entsprechend dem entnommenen Flüssigkeitsvolumen nach oben. Damit der Luftdruck den Schieber 69 nach oben drücken kann, muss der Behälter unterhalb des Schiebers 69 eine Ausgleichsöffnung aufweisen. Diese Ausführungsform ermöglicht es, dass die Vorratskammer 71 frei von Luft ist. Dadurch sind sauerstoffsensitive Füllgüter nach dem erstmaligen Gebrauch des Pumpbehälters 14 lange haltbar, da sie mit Luftsauerstoff nicht in Kontakt kommen. Bevorzugt ist es, wenn der Adapter 25 mit dem Behälter 13 und dem Gehäuse 15 formschlüssig und flüssigkeitsdicht verrastbar ist, wie dies in der Figur 10 gezeigt ist.

Alle Komponenten des Pumpspenders und der Behälter 13 können aus demselben Kunststoff hergestellt sein. Dadurch ist ein Recycling der gesamten Komposition sichergestellt. Die Feder 35 stellt durch ihre Ausgestaltung mit Ringen 45 und Verbindungsstegen 51 die Rückstellung des Pumpenkopfes 29 auch nach oftmaliger Verwendung sicher, obwohl sie aus Kunststoff gefertigt ist. Eine weitere Besonderheit des Pumpspenders 11 stellt die Ventil- und Belüftungsfunktion mit einer ersten bzw. zweiten Ventilscheibe 41,59 dar. Besonders praktisch ist, dass die Spenderöffnung 37 sich nicht mit dem Pumpenkopf 29 mitbewegt, sondern an dem feststehenden Gehäuse 15 vorgesehen ist. Denkbar ist es auch, dass die Spenderöffnung 37 als ein Zerstäuber ausgebildet ist und der Pumpspender 11 dadurch eine Sprayfunktion der Flüssigkeit besitzt. Die Grösse des Dosiervolumens bzw. das Sperren des Pumpenhubes 57 lässt sich durch Verdrehen des Pumpenkopfes 29 relativ zum Gehäuse 15 einstellen, da die Längsrippen 53 unterschiedlich lang sind.

### Legende:

- 11: Pumpspender
- 13: Behälter, Flasche
- 14: Pumpbehälter
- 15: Gehäuse
- 17: Innengewinde
- 19: Aussengewinde
- 21: Behälterhals
- 23: Dosierkammer, Kolbenraum
- 25: Adapter
- 27: Steigrohr
- 29: Pumpenkopf
- 31: Längsachse
- 33: Kolben
- 35: Feder
- 37: Spenderöffnung
- 39: Spenderfortsatz
- 41: Erste Ventilscheibe
- 43: Absatz
- 45: Ringe
- 47: Ringsegmente
- 49: Ausnehmung
- 51a,51b,51c: Erste, zweite und dritte Verbindungsstege
- 53: Längsrippen
- 55: Anschläge
- 57: Pumpenhub
- 59: Zweite Ventilscheibe
- 61: Belüftungsöffnung
- 63: Weitere Belüftungsöffnung
- 65: Dritte Ventilscheibe
- 67: Vierte Ventilscheibe
- 69: Schieber
- 71: Vorratskammer

## Patentansprüche

1. Pumpspender (11) zur dosierten Entnahme einer Flüssigkeit aus einem Behälter (13) auf welchen der Pumpspender (11) aufsetzbar ist, aufweisend
- ein Gehäuse (15), welches auf den Behälter (13) aufsetzbar ist und in welchem eine Dosierkammer (23) gebildet ist,
- einen Pumpenkopf (29), welcher relativ zu dem Gehäuse (15) entlang der Längsachse (31) des Spenders (11) zwischen einer ersten und zweiten Position auf und ab bewegbar ist zur Ausführung eines Pumpenhubes (57),
- einen Kolben (33), welcher an dem Pumpenkopf (29) festgelegt ist und in der Dosierkammer (23) zur Förderung der Flüssigkeit bewegbar ist,
- eine Spenderöffnung (37) , welche mit der Dosierkammer (23) verbunden ist und durch welche dosierte Flüssigkeit den Pumpspender (11) verlassen kann,
- eine Feder (35), welche den Pumpenkopf (29) relativ zum Gehäuse (15) rückstellt und
- ein Ventil (41), welches die Förderrichtung der Flüssigkeit von dem Behälter (13) in die Spenderöffnung (37) definiert und eine Förderung in umgekehrter Richtung sperrt, wobei
- die Feder (35) aus Kunststoff hergestellt ist und eine Mehrzahl von übereinander angeordneten Ringen (45) aufweist, welche jeweils durch wenigstens einen ersten Verbindungssteg (51a) miteinander verbunden sind und
- das Ventil durch eine erste Ventilscheibe (41) aus Kunststoff realisiert ist, welche Ventilscheibe (41) zwischen der Oberseite eines in das Gehäuse (15) eingesetzten Adapters (25) und dem Gehäuse (15) angeordnet ist und entweder die Spenderöffnung (37) oder den Adapter (25) flüssigkeitsdicht verschliesst, **dadurch gekennzeichnet,**
**dass** an dem Adapter (25) an seiner Unterseite eine zweite Ventilscheibe (59) aus Kunststoff gehalten ist und die zweite Ventilscheibe (59) eine an dem Adapter (25) vorgesehenen Belüftungsöffnung (61) verschliesst und beim Ansaugen von Flüssigkeit in die Dosierkammer (23) die Belüftungsöffnung (61) freigibt.

2. Pumpspender nach Anspruch 1, **dadurch gekennzeichnet, dass** die Ringe (45) horizontal, vertikal oder schräg zur Horizontalen orientiert sind.

3. Pumpspender nach Anspruch 1 oder 2, **dadurch gekennzeichnet, dass** übereinanderliegende Ringe (45) durch einen ersten und zweiten Verbindungssteg (51a,51b) miteinander verbunden sind, wobei benachbarte übereinander angeordnete erste und zweite Verbindungsstege (51a,51b) um 90 Grad versetzt sind und der erste und zweite Verbindungssteg (51a,51b) an dem Ring (45) sich diametral gegenüberliegen.

4. Pumpspender nach einem der vorangehenden Ansprüche, **dadurch gekennzeichnet, dass** die Feder (35) ausserhalb der Dosierkammer (23) in dem Gehäuse (15) aufgenommen ist.

5. Pumpspender nach einem der vorangehenden Ansprüche, **dadurch gekennzeichnet, dass** die Feder (35) zusätzlich zu den Ringen (45) wenigstens ein Ringsegment (47) aufweist, wobei das wenigstens eine Ringsegment (47) eine Ausnehmung (49) bildet,

6. Pumpspender nach Anspruch 5, **dadurch gekennzeichnet, dass** zwischen vertikal orientierten Ringen (45) einer horizontalen Ebene wenigstens ein Abstand vorgesehen ist, welcher die Ausnehmung (49) oder einen Teil der Ausnehmung (49) bildet.

7. Pumpspender nach einem der vorangehenden Ansprüche, **dadurch gekennzeichnet, dass** die Spenderöffnung (37) an dem Gehäuse (15) vorgesehen ist.

8. Pumpspender nach einem der vorangehenden Ansprüche, **dadurch gekennzeichnet, dass** der Adapter (25) ein bis zum Boden des Behälters (13) sich erstreckendes Steigrohr (25) mit dem Gehäuse (15) verbindet.

9. Pumpspender nach einem der vorangehendenden Ansprüche, **dadurch gekennzeichnet, dass** durch den Adapter (25) das Gehäuse (15) mit dem Behälter (13) verbindbar ist.

10. Pumpbehälter aufweisend einen Pumpspender (11) nach einem der vorangehenden Ansprüche und einen Behälter (13), auf welchen der Pumpspender (11) aufsetzbar ist.

## Claims

1. Pump dispenser (11) for the metered removal of a liquid from a container (13) onto which the pump dispenser (11) can be placed, comprising
- a housing (15) which can be placed on the container (13) and in which a metering chamber (23) is formed,
- a pump head (29) which can be moved up and down relative to the housing (15) along the longitudinal axis (31) of the dispenser (11) between a first and second position in order to carry out a pump stroke (57),
- a piston (33) which is secured to the pump head (29) and can be moved in the metering chamber (23) in order to convey the liquid,
- a dispenser opening (37) which is connected to the metering chamber (23) and through which metered liquid can leave the pump dispenser (11),
- a spring (35) which resets the pump head (29) relative to the housing (15), and
- a valve (41) which defines the conveying direction of the liquid from the container (13) into the dispenser opening (37) and which blocks a conveying process in the opposite direction, wherein
- the spring (35) is made of plastics material and has a plurality of rings (45) which are arranged one over the other and which are connected together by at least one first connecting web (51a) in each case and
- the valve is realized by a first valve disk (41) made of plastics material, which valve disk (41) is arranged between the upper side of an adapter (25) inserted into the housing (15) and the housing (15), and closes either the dispenser opening (37) or the adapter (25) in a liquid-tight manner,
**characterized in that**
a second valve disk (59) made of plastics material is held on the adapter (25) on its underside, and the second valve disk (59) closes a ventilation opening (61) provided on the adapter (25) and releases the ventilation opening (61) when liquid is sucked into the metering chamber (23).

2. Pump dispenser according to claim 1, **characterized in that** the rings (45) are oriented horizontally, vertically or at an angle to the horizontal.

3. Pump dispenser according to either claim 1 or claim 2, **characterized in that** rings (45) lying one above the other are interconnected by a first and second connecting web (51a, 51b), wherin adjacent first and second connecting webs (51a, 51b) arranged one above the other are offset by 90 degrees and the first and second connecting webs (51a, 51b) are diametrically opposed to the ring (45).

4. Pump dispenser according to any of the preceding claims, **characterized in that** the spring (35) is accommodated outside the metering chamber (23), in the housing (15).

5. Pump dispenser according to any of the preceding claims, **characterized in that** the spring (35) has at least one ring segment (47) in addition to the rings (45), the at least one ring segment (47) forming a recess (49).

6. Pump dispenser according to claim 7, **characterized in that** at least one distance is provided between vertically oriented rings (45) of a horizontal plane, said distance forming the recess (49) or a part of the recess (49).

7. Pump dispenser according to any of the preceding claims, **characterized in that** the dispenser opening (37) is provided on the housing (15).

8. Pump dispenser according to any of the preceding claims, **characterized in that** the adapter (25) connects a rising tube (27), extending to the base of the container (13), to the housing (15).

9. Pump dispenser according to any of the preceding claims, **characterized in that** the housing (15) can be connected to the container (13) by the adapter (25).

10. Pump container comprising a pump dispenser (11) according to any of the preceding claims and a container (13) on which the pump dispenser (11) can be placed.

## Revendications

1. Distributeur à pompe (11), permettant le prélèvement dosé d'un liquide à partir d'un récipient (13), sur lequel le distributeur à pompe (11) peut se poser, comportant
- un corps (15), lequel peut se poser sur le récipient (13) et dans lequel est constituée une chambre de dosage (23),
- une tête de pompe (29), laquelle est déplaçable vers le haut et vers le bas par rapport au corps (15), le long d'un axe longitudinal (31) du distributeur (11), entre une première et une deuxième position, pour réaliser une course de pompage (57),
- un piston (33), lequel est fixé sur la tête de pompe (29) et est déplaçable dans la chambre de dosage (23), pour transporter le liquide,
- un orifice de distribution (37), lequel est relié avec la chambre de dosage (23) et à travers lequel du liquide dosé peut quitter le distributeur à pompe (11),
- un ressort (35), lequel rappelle la tête de pompe (29) par rapport au corps (15) et
- une valve (41), laquelle définit la direction de transport du liquide, du récipient (13) jusque dans l'orifice de distribution (37) et bloque un transport dans la direction inverse,
- le ressort (35) étant fabriqué en matière plastique et comportant une pluralité d'anneaux (45) superposés, lesquels sont chaque fois reliés les uns avec les autres par au moins une première barrette de liaison (51a) et
- la valve étant réalisée par un premier disque de valve (41) en matière plastique, lequel disque de valve (41) étant placé entre la face supérieure d'un adaptateur (25) inséré dans le corps (15) et le corps (15) et fermant de manière étanche au liquide, soit l'orifice de distribution (37) ou l'adaptateur (25),
**caractérisé**
**en ce que** sur l'adaptateur (25), sur une face inférieure, est maintenu un deuxième disque de valve (59) en matière plastique et **en ce que** le deuxième disque de valve (59) ferme un orifice d'aération (61) prévu sur l'adaptateur (25) et lors d'une aspiration de liquide dans la chambre de dosage (23), libère l'orifice d'aération (61).

2. Distributeur à pompe selon la revendication 1, **caractérisé en ce que** les anneaux (45) sont orientés à l'horizontale, à la verticale ou en oblique par rapport à l'horizontale.

3. Distributeur à pompe selon la revendication 1 ou 2, **caractérisé en ce que** des anneaux (45) superposés sont reliés les uns avec les autres par une première et une deuxième barrettes de liaison (51a, 51b), des premières et des deuxièmes barrettes de liaison (51a, 51b) voisines superposées étant déportées de 90 degrés et la première et la deuxième barrette de liaison (51a, 51b) étant diamétralement opposées sur l'anneau (45).

4. Distributeur à pompe selon l'une quelconque des revendications précédentes, **caractérisé en ce que** le ressort (35) est réceptionné dans le corps (15) à l'extérieur de la chambre de dosage (23).

5. Distributeur à pompe selon l'une quelconque des revendications précédentes, **caractérisé en ce que** le ressort (35) comporte additionnellement aux anneaux (45) au moins un segment (47) **d'anneau,** l'au moins un segment (47) d'anneau constituant un évidement (49).

6. Distributeur à pompe selon la revendication 5, **caractérisé en ce qu'**entre des anneaux (45) orientés à la verticale d'un plan horizontal, il est prévu au moins un espace, lequel constitue l'évidement (49) ou une partie de l'évidement (49).

7. Distributeur à pompe selon l'une quelconque des revendications précédentes, **caractérisé en ce que** l'orifice de distribution (37) est prévu sur le corps (15).

8. Distributeur à pompe selon l'une quelconque des revendications précédentes, **caractérisé en ce que** l'adaptateur (25) relie avec la corps (15) un tube montant (25) s'étendant jusqu'au fond du récipient (13).

9. Distributeur à pompe selon l'une quelconque des revendications précédentes, **caractérisé en ce que** par l'adaptateur (25), le corps (15) peut se relier avec le récipient (13).

10. Récipient à pompe, comportant un distributeur à pompe (11) selon l'une quelconque des revendications précédentes et un récipient (13), sur lequel le distributeur à pompe (11) peut se poser.
